# EUROPEAN PATENT APPLICATION

(11) **EP 1 298 546 A2**
(43) Date of publication of application: **02.04.2003**
(21) Application number: 02256840.6
(22) Date of filing: 01.10.2002
(51) Int. Cl.: G06F 17/30

(54) **Data distributing method**

(30) Priority: 01.10.2001 JP 2001305859
(71) Applicant: Toshiba Carrier Corporation, Tokyo 105-8001 (JP)
(72) Inventor: Saito, Hidemitsu, c/o K.K. Toshiba, Tokyo (JP); Onishi, Yasunori, c/o K.K. Toshiba, Tokyo (JP); Yamagata, Yoshiyuki, c/o K.K. Toshiba, Tokyo (JP)
(74) Representative: Granleese, Rhian Jane

(57) **Abstract**

Real-time update of data between a client (1) and a server (2) is enabled to reduce load on a network. There is provided a data distributing method for distributing updated data to a client (1) by a push type distribution after data of a data base of a server (2) is updated, to share data between the server (2) and the client (1), the method comprising: causing the server (2) to store a client management information including a data range, which the client (1) is using, in the data base (24) of the server (2), and causing the server (2) to identify data, which is to be transmitted to the client (1), by referring to the client management information (242) before transmitting data.

## Description

The present invention generally relates to a method for supplying partial data between a plurality of computers which are connected by Internet/Intranet. More specifically, the invention relates to a data distributing method suitable for supporting an application system which has a push distributing function of distributing data in synchronism with the update of data in addition to sharing data and which is constructed on Internet/Intranet.

The DBMS (Data Base Management System) application based on a conventional server/client system uses the "pull-push type distribution" for synchronizing data between a client and a server by distributing data by an inquiry from the client when the server and client share data.

However, in this "pull-push type distribution, there is a disadvantage in that the time required to carry out a communication is increased by inquiring of the server. In addition, the range specifying the portion of data to be distributed can not be assigned by the client, so that a large amount of whole data is distributed to the client. However, in a data distribution using a wide area network such as Internet, it is important to reduce traffic, and it is not preferred to transmit a large amount of data like the "pull-push type distribution". For these reasons, the "pull-push type distribution" is not suitable for a real-time data distribution on a wide area network.

As described above, in the conventional DBMS application, in the "pull-push type distribution" which is a method for synchronizing data between computers connected to each other by the network, there are the following problems:
(a) the communication time required at the time of the update of data increases by the inquiry which is necessary for the client to synchronize data; and
(b) since it is impossible to assign a range of data from the client when the client inquires of the server the presence of update of data, it is impossible for the client to grasp the amount of data transmitted to the client from the server, so that there are some cases where a large amount of data is transmitted.

According to a first aspect of the present invention, there is provided a data distributing method for distributing updated data to a client by a push type distribution after data of a data base of a server is updated, to share data between the server and the client, the method comprising: causing the server to store a client management information including a data range, which the client is using, in the data base of the server, and causing the server to identify data, which is to be transmitted to the client, by referring to the client management information before transmitting data.

According to a second aspect of the present invention, there is provided a computer readable medium containing a data distributing program for distributing updated data to a client by a push type distribution after data of a data base of a server is updated, to share data between the server and the client, the program comprising instructions for: causing the server to store a client management information including a data range, which the client is using, in the data base of the server; and causing the server to identify data, which is to be transmitted to the client, by referring to the client management information before transmitting data.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.
FIG. 1 is a functional block diagram showing the whole configuration of the data sharing/distributing method according to an embodiment of the present invention;
FIG. 2 is a flow chart showing the "server start processing" in the data sharing/distributing method according to an embodiment of the present invention;
FIG. 3 is a flowchart showing the "server end processing" in the data sharing/distributing method according to an embodiment of the present invention;
FIG. 4 is a flow chart showing the "data automatic update processing when a display range is not changed" in the data sharing/distributing method according to an embodiment of the present invention;
FIG. 5 is a flow chart showing the "data acquiring processing within a display range" in the data sharing/distributing method according to an embodiment of the present invention;
FIG. 6 is a flow chart showing the "processing when a required range of data is not stored in general data, in the acquisition of data beyond a display range and in a data automatic update processing after acquiring data" in the data sharing/distributing method according to an embodiment of the present invention;
FIG. 7 is a flow chart showing the "processing when a required range of data is stored in general data, in the acquisition of data beyond a display range and in a data automatic update processing after acquiring data" in the data sharing/distributing method according to an embodiment of the present invention;
FIG. 8 is a flow chart showing the "processing when the setting of automatic update by the client is changed from On to Off" in the data sharing/distributing method according to an embodiment of the present invention;
FIG. 9 is a flow chart showing the "processing when the setting of automatic update by the client is changed from Off to On" in the data sharing/distributing method according to an embodiment of the present invention;
FIG. 10 is a schematic diagram showing an example of a construction of a general data record;
FIG. 11 is a schematic diagram showing an example of a construction of a display range data; and
FIG. 12 is a schematic diagram showing an example of a construction of a client management data.

Referring now to the accompanying drawings, an embodiment of the present invention will be described below. Furthermore, portions concerning information processing in this embodiment are typically realized by controlling a computer by means of software. In this case, the software realizes the operations and effects of the present invention by physically using the hardware of the computer, and the prior art is applied to the portions of the software common to the prior art. However, in this case, the kinds and configurations of the hardware and software, and the extent processed by the software can be changed in various ways. Therefore, in the following descriptions, virtual circuit blocks realizing various functions in the present invention and embodiment are used.

In this embodiment, while data displayed on a screen of a display by a client has been described as an example of data in use by the client, data in use should not be limited thereto, but data used by a program executed in the background without being displayed on the display may be data in use by the client.

### [1. Configuration]

This embodiment relates to a data sharing/ distributing method for appropriately and efficiently managing a data base provided in each of a server and a client which are connected to each other.

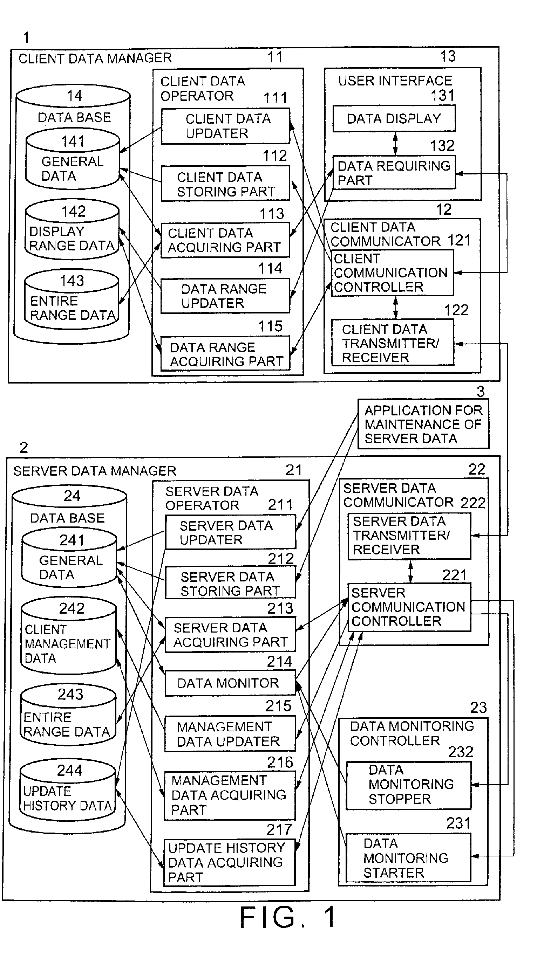

FIG. 1 is a diagram showing the whole configuration of a system for realizing the data sharing/distributing method in this embodiment. This system comprises a client data manager 1 provided on the side of a client, a server data manager provided on the side of a server, and a server data maintenance application 3, which are connected to each other by a network.

### [1-1. Configuration of Client Data Manager (Upper Part in FIG. 1)]

As shown in FIG. 1, the client data manager 1 comprises a client data operator 11 for managing data in the client, a client data communicator 12 for exchanging data to/from the server, a user interface 13 for accepting a data acquiring demand to display data as a result, and a client-side data base 14.

### [1-1-1. Client-side Data Base]

The client-side data base 14 includes a general data 141, a display range data 142 and an entire range data 143.

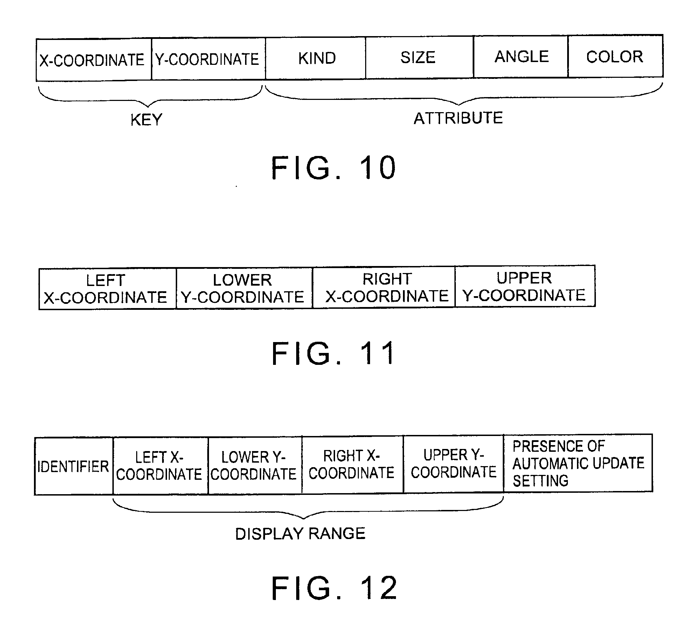

Each record of the general data 141 comprises a key indicative of the identification of data, and an actual data corresponding to the key one to one. General data operations for acquiring, updating and storing data are always carried out by specifying the key. In this embodiment, general data handled in the server-side data base, the client-side data base and application is a graphic data using position coordinates (X-coordinate and Y-coordinate) on a two dimensional (plane) as keys, for example, as shown in FIG. 10. Data fields (attributes) other than the keys include, e.g., the kind of a graphic (e.g., circle, rectangle), size, angle and color.

The entire range data 143 has a key corresponding to the entire range of data possessed by the server. At the time of acquisition of data, it is possible to acquire a key with respect to a certain range given from the entire range of data.

The display range data 142 has a range in which data is displayed by the client. If the display range displayed by the client is changed, the display range data 142 is updated, and the updated data is transmitted to the server. Furthermore, the data displayed as the display range data 142 is ensured to be somewhat larger than the actually displayed range, so that the display range data is not designed to be frequently updated. In addition, the display range data 142 of the client-side data base 14 comprises four coordinates of two points (lower left and upper right) which specify a rectangular display range on a two dimensional (plane).

### [1-1-2. Client Data Operator]

The client data operator 11 is provided with a client data updater 111 for updating data having been stored in the client-side data base 14, a client data storage 112 for newly adding data to the client-side data base 14, a client data acquiring part 113 for acquiring data to be displayed from the client-side data base 14, a data range updater 114 for modifying the data display range on the side of the client, and a data range acquiring part 115 for fetching the data display range on the side of the client.

The client data updater 111 is designed to update the general data 141 in the data base by using data acquired by a client data transmitter/receiver 122, which is provided in the client data communicator 12 and which will be described later, to be delivered to the client communication controller 121. Furthermore, the client data updater 111 is designed to search for a key of data to be updated, from the general data 141, and to update actual data corresponding to the key if the key is found.

The client data storing part 112 is designed to store data, which is acquired by the client data transmitter/receiver 122 to be delivered to the client communication controller 121, in the general data 141 in the data base. In this case, the client data storing part 112 is designed to store a key and actual data corresponding thereto, in the general data 141.

The client data acquiring part 113 is designed to acquire data, which is required by the data requiring part 132 of the user interface 13, from the general data. The client data acquiring part 113 is designed to acquire keys from the entire range data 143 in the data base on the basis of the "data range" delivered from the data acquiring part 132, to search for the acquired key from the general data 141, and to acquire actual data corresponding to each of the keys if the key is found. The acquired data is delivered to the data acquiring part 132. On the other hand, keys which could not acquired data are delivered to the data acquiring part 132.

The data range updater 114 is designed to update the display range data when the range displayed by the data display 131 of the user interface 13 is changed. The data range updater 114 is designed to receive the modified display range from the data requiring part 132 to use the range to update the display range data 142 in the data base.

The data range acquiring part 115 is designed to acquire an updated new display range in order to notify the server of the change of the client's display range when the client's display range is updated. The data range acquiring part 115 is designed to acquire the current display range from the display range data 142 in response to the data range acquiring demand from the client communication controller 121, to deliver the acquired current display range to the client communication controller 121.

### [1-1-3. Client Data Communicator]

The client data communicator 12 is provided with the client communication controller 121 for controlling the client-side data management and the transmission/receiving of data to/from the server, and a client data transmitter/receiver 122 for carrying out a data communication processing to/from the server.

The client communication controller 121 is designed to deliver data transmitted from the server to the client data operator 11, and to acquire a new display range from the data range acquiring part 115 to transmit the new display range to the server when the client's display range changes. The client communication controller 121 is designed to output an "automatic update setting modifying demand" to the server in response to an "automatic update setting modifying demand" from the data requiring part 132.

If the updated data is transmitted from the server, the client communication controller 121 receives data via the client data transmitter/receiver 122 to deliver the data to the client data updater 111 to cause it to update the general data 141. If data which is not included in the general data is required by the data requiring part 132, the client communication controller 121 instructs the client data transmitter/receiver 122 to send a "data transmitting demand" to the server, and receives data transmitted from the server, via the client data transmitter/receiver 122 as a result. The received data is delivered to the client data storage 112 to be stored as a new data in the general data 141, and delivered to the data requiring part 132 to be used for the display of data as it is.

If the client's display range changes, the client communication controller 121 receives a display range transmitting demand to the server from the data requiring part 132, to acquire a new display range from the data range acquiring part 115. Then, the client communication controller 121 delivers the acquired range to the client data transmitter/receiver 122 to instruct to transmit the display range to the server. If the client communication controller 121 receives automatic update setting information from the data requiring part 132, the client communication controller 121 delivers the setting information to the client data transmitter/receiver 122 to output an automatic update setting modifying demand to the server.

On the other hand, the client data transmitting part 122 is designed to transmit data in response to the data transmitting demand from the client communication controller 121, and to receive data transmitted from the server as a result, to deliver the data to the client communication controller 121.

### [1-1-4. User Interface]

The user interface 13 is provided with a data display 131 for displaying data by a user's operation, and a data requiring part 132 for acquiring a corresponding data in response to a data request from the data display 131.

If a data acquiring operation is carried out by a user's operation, the data display 131 makes a data acquiring demand to the data requiring part 132, and receives the acquired data to display it. If the data automatic update setting is modified by a user's operation, the data display 131 makes an automatic update setting modifying demand to the data requiring part 132. Moreover, the data display 131 delivers a data range to be acquired, to the data display 132 to meet the data acquiring demand. As a result, the data display 131 receives data acquired by the data requiring part 132, to display the data. In addition, the data display 131 delivers a data automatic update setting information to the data requiring part 132 to meet the automatic update setting modifying demand.

On the other hand, the data requiring part 132 is designed to receive a corresponding data from the client data acquiring part 113 and client communication controller 121 in response to the data acquiring demand from the data display 131, to deliver the data to the data display 131. The data requiring part 132 is designed to deliver an automatic update setting information to the client communication controller 121 in response to the automatic update setting modifying demand from the data display 131, to meet the automatic update setting modifying demand. Moreover, if the data requiring part 132 receives a data acquiring range from the data display 131, the data requiring part 132 acquires data existing in the range from the client data acquiring part 113.

Then, if data in the acquiring range does not exist in the general data 141, the data requiring part 132 delivers keys of data, which could not be acquired, to the client communication controller 121, and receives data acquired by the client communication controller 121 from the server as a result. In addition, the data requiring part 132 delivers data, which is acquired from the client data acquiring part 113 and client communication controller 121, to the data display. Moreover, if the data requiring part 132 determines that the display range is changed by the request from the data display 131, the data requiring part 132 updates the display range data, and simultaneously, deliver the modified display range to the client communication controller 121 to notify the server of the change of the data display range. If the data requiring part 132 receives an automatic update setting information from the data display 131, the data requiring part 132 delivers the setting information to the client communication controller 121.

### [1-2. Configuration of Server Data Manager (Lower Part in FIG. 1)]

As shown in FIG. 1, the server data manager 2 comprises a server data operator 21 for managing data in the server, a server data communicator 22 for exchanging data to/from the client, a data monitoring controller 23 for controlling the operation of data monitoring, and a server-side data base 24.

### [1-2-1. Server-side Data Base]

The server-side data base 24 includes a general data 241, a client management data 242, an entire range data 243 and an update history data 244.

Each record of the general data 241 comprises a key indicative of the identification of data, and an actual data corresponding to the key one to one. Furthermore, general data operations for acquiring, updating and storing data are always carried out by specifying the key. In addition, the general data 241 of the server-side data base 24 usually stores therein a plurality of records shown in FIG. 10, and all of the key portions of these records are also registered in the entire range data 243.

In addition, the entire range data 243 has keys corresponding to the entire range of data possessed by the server. At the time of acquisition of data, it is possible to acquire a key with respect to an specified range from the entire range of data. Furthermore, the entire range data 143 of the client-side data base 14 is the same as the entire range data 243 of the server-side data base 24. General data records having keys included in the entire range data and also included in a rectangular display range specified by the display range data are copied on the general data 141 of the client-side data base 14 from the general data 241 of the server-side data base.

The client management data 242 of the server-side data base 24 stores therein a record shown in FIG. 12, wherein a client's identifier is added to the data every client in order to managing the display range of each client and the presence of an automatic update setting.

Moreover, the client management data 242 has information about a data display range of each client and the presence of an automatic update. If data is updated by the server, the transmission of the updated data is controlled by the client management data 242.

The update history data 244 has keys with respect to the updated data if data in the data base 24 is updated by the server data updater 211 which will be described later.

### [1-2-2. Server Data Operator]

The server data operator 21 is provided with a server data updater 211 for updating data having been stored in the data base 24, a server data storing part 212 for newly adding data to the data base 24, a server data acquiring part 213 for acquiring data, which is to be transmitted to the client, from the data base 24, a data monitor 214 for monitoring the update of data on the side of the server, a management data updater 215 for updating client management information (the data range on the side of each client, the automatic update information), a management data acquiring part 216 for acquiring client management information, and an update history data acquiring part 217 for acquiring update history data of the server-side data.

The server data updater 211 is designed to updated data in the data base 24 when the application 3 for maintenance of server data makes a data update demand. Furthermore, the server data updater 211 is designed to receive a key and actual data from the application 3 to update actual data corresponding to the key, and to store the key of the updated data in the update history data 244.

The server data storing part 212 is designed to store data in the data base 24 when the application for maintenance of the server data makes a data storing demand. Furthermore, the server data storing part 212 is designed to receive a key and actual data from the application 3 to store the key and actual data in the data base 24.

The server data acquiring part 213 is designed to acquire data, which is required by a server communication controller 221, from the general data 241 in the data base 24. The server data acquiring part 213 is designed to acquire a key, which is transmitted from the client, from the server communication controller 221 to acquire actual data corresponding thereto. If the data monitor 214 detects the update of data, the server data acquiring part 213 receives a data range from the server communication controller 221 to acquire keys in the data range received from the entire range data 243. Then, the server data acquiring part 213 acquires actual data corresponding to the keys acquired, of which data has been updated.

The data monitor 214 is designed to monitor whether the general data 241 of the server is updated. The data monitor 214 starts monitoring in response to a monitoring starting demand from the data monitoring starter 231, and stops monitoring in response to a monitoring stop demand from the data monitoring stopper 232. If the general data 241 is updated, the data monitor 214 detects the update thereof. At this time, the data monitor 214 acquires a key corresponding to the updated data, and delivers the key to the server communication controller 221 to notify of the update of data.

The management data updater 215 is designed to update the client management data 242 when the server communication controller 221 makes a demand for update of the client management data 242. Themanagement data updater 215 is designed to receive information about a client identifier, a new data display range and the presence of automatic update from the server communication controller 221 to cause the received information to be reflected to the client management data 242.

The management data acquiring part 216 is designed to acquire required information from the client management data 242 when the server communication controller 221 makes a demand for acquisition of the client management data 242. The management data acquiring part 216 is designed to acquire information about the data display range and the presence of automatic update on the basis of the client identifier from the client management data 242, to deliver the acquired information to the server communication controller 221.

The update history data acquiring part 217 is designed to acquire a key corresponding to the updated data from the update history data 244 when the server communication controller 221 makes a demand for acquisition of the update history data 244. The update history data acquiring part 217 is designed to acquire a key corresponding to the updated data from the update history data 244 to deliver the key to the server communication controller 221. In addition, after the update history data acquiring part 217 acquires the key, the update history data acquiring part 217 deletes the key from the update history data 244.

### [1-2-3. Data Monitoring Controller]

The data monitoring controller 23 is provided with a data monitoring starter 231 for starting data monitoring, and a data monitoring stopper 232 for stopping data monitoring.

The data monitoring starter 231 is designed to start the operation of the data monitor 214 in response to a data monitoring starting demand from the server communication controller 221. Furthermore, when the data monitoring starter 231 receives the data monitoring starting demand from the server communication controller 221, the data monitoring starter 231 causes the data monitor 214 to start data monitoring.

The data monitoring stopper 232 is designed to stop the operation of the data monitor 214 in response to a data monitoring stopping demand from the server communication controller 221. Furthermore, when the data monitoring stopper 232 receives the data monitoring stopping demand from the server communication controller 221, the data monitoring stopper 232 causes the data monitor 214 to stop data monitoring.

### [1-2-4. Server Data Communicator]

The server data communicator 22 is provided with a server communication controller 221 for controlling the server-side data management and the transmission/receiving of data to/from the server, and a server data transmitter/receiver 222 for carrying out a data communication processing to/from the server.

The server communication controller 221 is designed to receive a transmitting demand from the client and a transmit data to deliver the data to the server data operator 21, and to transmit data, which is acquired from the server data operator 21, to the client if necessary. If a key corresponding to data, which is not stored in the client, is transmitted from the client, the server communication controller 221 receives the key from the server data transmitter/receiver 222 to deliver the received key to the server data acquiring part 213 to acquire data corresponding to the key, to deliver the acquired data to the server data transmitter/receiver 222 to instruct it to transmit the delivered data to the client.

If information about a display range in the client and the presence of automatic update is transmitted from the client, the server communication controller 221 receives the information from the server data transmitter/receiver 222 to deliver the received information to the management data updater 215 to cause it to update the client management data 242. When the execution of the server communication controller 221 is started, the server communication controller 221 first becomes in a state capable of transmitting/receiving data to/from the client, and makes a data monitoring starting demand to the data monitoring starter 231.

When the operation of the server communication controller 221 ends, the server communication controller 221 becomes in a state impossible to transmit/receive data to/from the client, and makes a data monitoring stopping demand to the data monitoring stopper 232. If the server communication controller 221 receives a notice of update of data from the data monitor 214, the server communication controller 221 acquires information about a client display range and the presence of automatic update from the client management data 242. If automatic update is "present", the server communication controller 221 acquires updated keys from the update history data 244 by means of the update history data acquiring part 217, and delivers keys of the client display range and updated data to the server data acquiring part 213 to make a demand for acquisition of updated data. Then, the server communication controller 221 delivers acquired updated data to the server data transmitter/receiver 222 to instruct it to transmit the delivered data to the client.

The server data transmitter/receiver 222 is designed to wait for receiving of a demand for transmission and transmit data from the client, to deliver the received demand for transmission and transmit data to the server communication controller 221. As a result, the server data transmitter/receiver 222 receives data, which is to be transmitted to the client, from the server communication controller 221 if necessary, and carries out data communication.

### [2. Operation]

The operation of this embodiment with the above described constructions will be described below. In this case, first, the operation of each of the client data manager and server data manager will be briefly described, and then, a data processing between both will be described referring to a flow chart.

### [2-1. Operation of Client Data Manager]

(a) In the client data manager 1, when the display range data is updated, the new display range is to be transmitted to the server. The display range is updated when any one of data in a range required by the data requiring part 132 can not be acquired from the client data acquiring part 113, i.e., resulting in transmitting a data transmitting demand to the server. By carrying out the update of the display range data and the transmission of the display range to the server, the updated data transmitted from the server can always fall in the client's display range.
   If data beyond the display range has been stored as the general data 141, the display range may be checked every time the data requiring part 132 makes a data acquiring demand, and the data range updater 114 may be caused to reflect a new range in the display range data 142 in timing when the display range changes, and to transmit the data range to the server.
(b) By transmitting the client' s display range to the server to cause the server to manage it, the client data manager 1 may only manage the display range, and the updated data transmitted from the server may be delivered to the client data updater 111 as it is, to cause the client data updater 111 to update data.
(c) The client monitors the transmission of updated data except when it makes a data acquiring demand to the server, when it transmits a data range and when it makes an automatic update setting modifying demand, and temporarily stops the acceptance of updated data when it makes a data acquiring demand to the server. If this operation is combined with the operation by the management of the display range data in the above described operation (a), it is possible to always receive updated data with respect to the changed display range after the client's display range is changed.
(d) Since the updated data transmitted from the server is synchronism with the client's display range by the above described operations (a) and (c), the client can receive the updated data transmitted from the server, without periodically making a data transmitting demand to the server. This shows that a "push type data distribution", not the conventional "pull-push type data distribution", is realized.

### [2-2. Operation of Server Data Manager]

(a) Conditions for carrying out an automatic update processing are defined by managing the client management data, i.e., the display range automatic update setting in the client, by the server. That is, by storing the client's display range in the client management data, it is detected that data corresponding to the display range has been updated, and it is determined whether this is to be transmitted to the client. In addition, in accordance with the setting of the "notice" or "non-notice" of updated data to the client, it is determined whether the client is notified of updated data when the server-side data is updated.
   After the data monitor 214 notifies the server communication controller 221 that data has been updated, the server communication controller 221 acquires information about a client which is currently exchanging data, from the management data acquiring part 216. To a client which is set so as not to carry out automatic update, it is not required to carry out the data acquiring processing from the server data acquiring part 213.
   On the other hand, if the client is set so as to carry out automatic update, the data monitor 214 gives the client-side display range acquired with the automatic update setting and the key acquired from the data monitor 214, to the server data acquiring part 213 in order to return the key of the updated data. Then, the server data acquiring part 213 can compare the key acquired from the entire range data 2423 with the key given to the server data acquiring part 213, to acquire only the key of data updated within the client's display range. If the key can be identified, data corresponding thereto can be acquired, so that the server data acquiring part 213 can acquire only the updated data within the client' s display range.
   Therefore, the server communication controller 221 can transmit only the updated data within the display range to the client. Thus, load on the network is reduced, so that the automatic updating speed in the client is improved.
(b) The server communication controller 221 only transmits the results of data monitoring to the client except when a data transmitting demand is made by the client, when a data range changing demand is made and when an automatic update setting modifying demand is made. If a data transmitting demand or a data range changing demand is made by the client, the acquisition and transmission of the updated data are temporarily stopped. The server communication controller 221 acquires data corresponding to a key, which is sent from the client, from the server data acquiring part 213 to transmit the data to the client.
   Another function of the server communication controller 221 is the function of delivering a new client's display range, which is transmitted immediately after the data transmitting demand or which is transmitted when the data range changing demand is made, or automatic change setting information, which is transmitted when the automatic update setting modifying demand is made, to the management data updater 215 to update the client management data 242. By acquiring and transmitting the updated data after the update of the client management data 242 ends, the client's display range can be synchronism with the range of the updated data transmitted from the server.
(c) By the operation of the data monitor 214, the transmission of the updated data from the server is carried out synchronously with the update of data of the server. In addition, since the ranges of data to be transmitted are synchronized with each other between the client and the server by the operation (b), the server can transmit the updated data to the client without the need of any periodical data acquiring demand from the client. This realizes a "push type data distribution", not the conventional "pull-push type data distribution".

### [2-3. Processing in Client Data Manager and Server Data Manager]

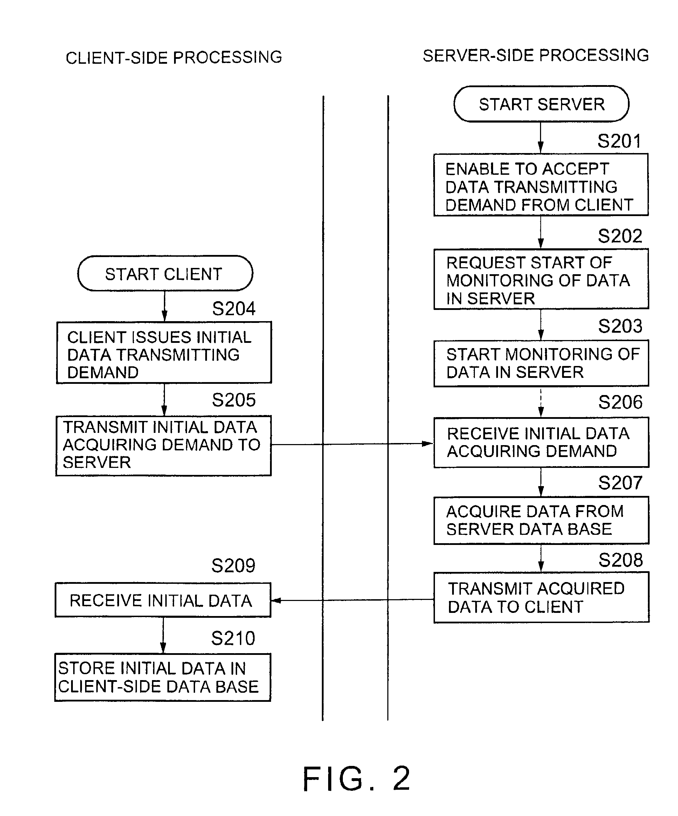

### [2-3-1. Start of Server and Acquisition of Initial Data of Client (FIG. 2)]

The server is started, the server communication controller 221 is first capable of accepting a data transmitting demand from a client (S201).

Then, the server communication controller 221 makes a data monitoring starting demand to the data monitoring starter 231 (S202). Then, the data monitoring starter 231 executes the data monitor 214 to start data monitoring (S203).

If the client is started in such a state that the server is thus started, the client data communication controller 122 makes a data transmitting demand with respect to data to be acquired, to the client data transmitter/receiver 121 (S204). In response to this transmitting demand, the client data transmitter/receiver 121 transmits an initial data acquiring demand to the server (S205).

In the server data transmitter/receiver 222, the server having received the initial data acquiring demand from the client fetches required data from the data base 24 in response to a command from the server data acquiring part 213 (S206, S207). The data thus fetched is transmitted to the client via the server data communication part 22 as a server's response (S208).

The client data communication part 12 of the client receives the initial data transmitted from the server (S209). This received data is stored in the client-side data base 14 by the data storing part 112 of the client data operator 11 (S210).

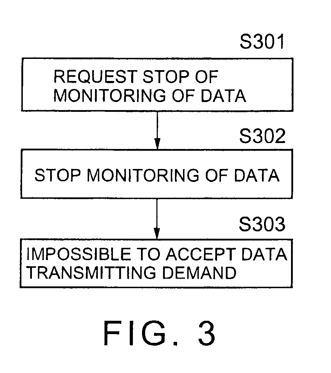

### [2-3-2. End of Server (FIG. 3)]

When the operation of the server ends, the server communication controller 221 makes a data monitoring stopping demand to the data monitoring stopper 232 (S301). The data monitoring stopper 232 stops the execution of the data monitor 214 to stop data monitoring (S302).

Finally, the server communication controller 221 falls in the state not to accept any data communication to/from the client and any data transmitting demand from the client (S303).

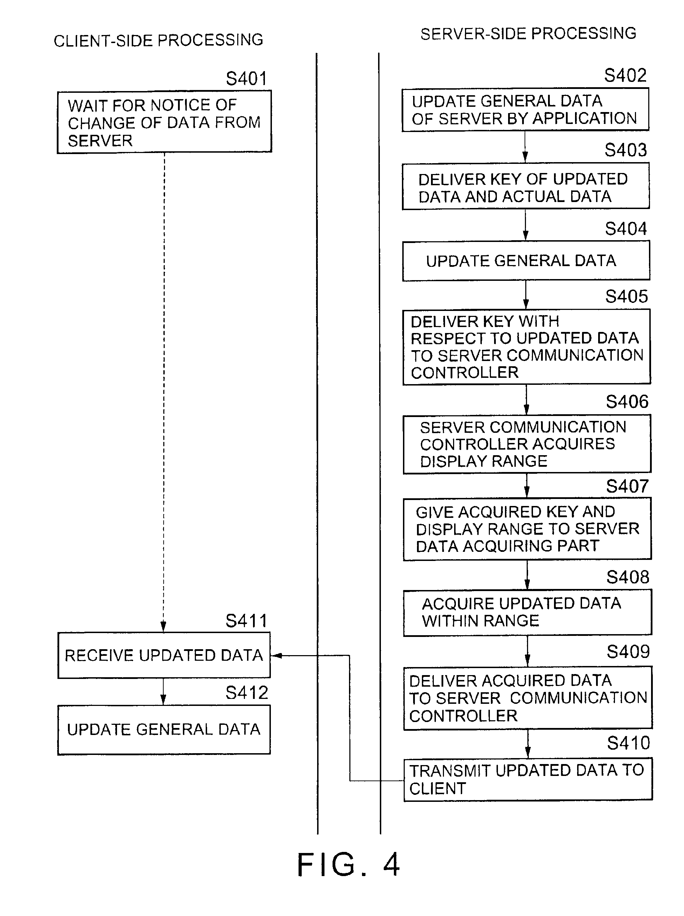

### [2-3-3. Data Automatic Update when Display Range is not Changed (FIG. 4)]

The client data transmitter/receiver 122 waits for a notice of change of data from the server (S401). The application 3 for maintenance of server data updates the general data 241 of the server (S402). The application 3 for maintenance of server data delivers a key of data to be updated and an actual data to the server data updater 211 (S403). The server data updater 211 updates the general data 241 on the basis of the received key and data (S404).

The data monitor 214 detects the update of data, and delivers a key corresponding to the updated data to the server communication controller 221 (S405).

When the server communication controller 221 receives the key, the server communication controller acquires the current display range from the management data acquiring part 216 (S406).

The server communication controller 221 gives the key, which is acquired from the data monitor 214, and the display range, which is acquired from the management data acquiring part 216, to the server data acquiring part 213 (S407). The server data acquiring part 213 acquires updated data within the range on the basis of the key and display range (S408), and delivers the acquired data to the server communication controller 221 (S409).

The server communication controller 221 delivers data, which is acquired from the server data acquiring part 213, to the server data transmitter/receiver 222, and transmits the updated data to the client (S410).

The client data transmitter/receiver 122 receives the transmitted updated data (S411), and delivers the received data to the client communication controller 121. The client communication controller 121 delivers the received data to the client data updater 111 to update the general data 141 (S412).

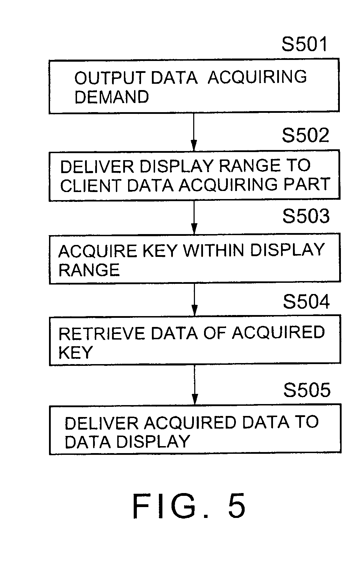

### [2-3-4. Acquisition of Data within Display Range (FIG. 5)]

The data display 131 intends to display data within the display range data on the screen. Then, the data display 131 makes a data acquiring demand to the data requiring part 131 (S501). The data requiring part 132 delivers the display range, which is given from the data display 131, to the client data acquiring part 113 (S502).

The client data acquiring part 113 acquires a key within the display range from the entire range data 143, with respect to the display range given from the data requiring part 132 (S503). Then, with respect to the acquired key, data having the key is retrieved from the general data 141 (S504). Since data could be acquired with respect to all the keys, the acquired data is delivered to the data display 131 (S505).

### [2-3-5. Acquisition of Data beyond Display Range and Automatic Update of Date after acquiring Data]

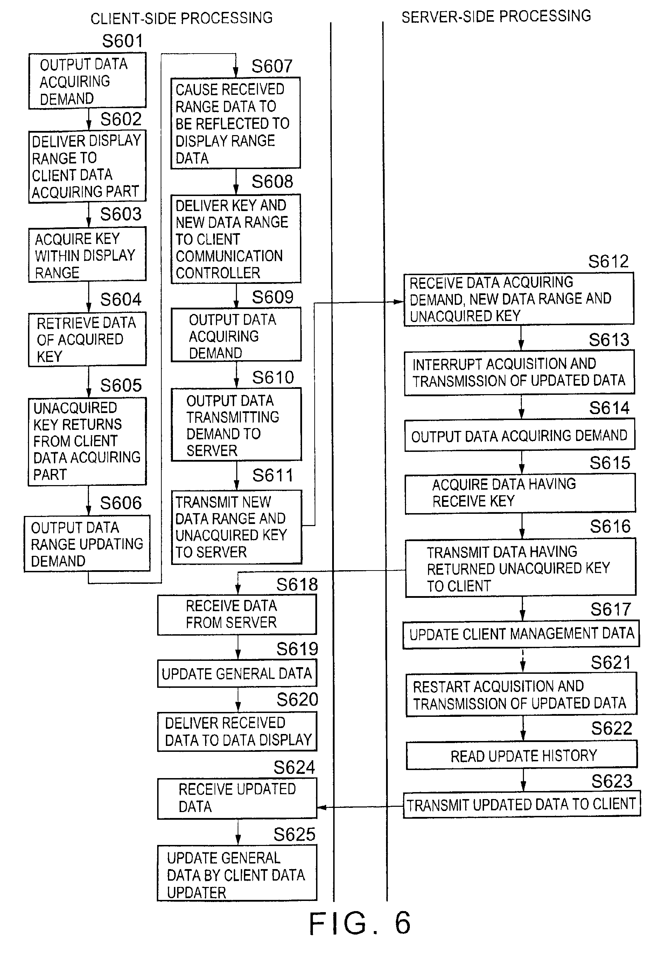

### [2-3-5-1. In a case where Data in Required Range has not been stored in General Data (FIG. 6)]

The data display 131 intends to display data, which has not been displayed, on the screen. Then, the data display 131 makes a data acquiring demand to the data acquiring part 132 (S601). The data acquiring part 132 delivers the display range, which is given from the data display 131, to the client data acquiring part 113 (S602).

The client data acquiring part 113 acquires a key within the display range from the entire range data 143 with respect to the display range given from the data requiring part 132 (S603). Then, with respect to the acquired key, data having the key is retrieved from the general data 141 (S604). Then, a key having not been acquired is returned from the client data acquiring part 113 (S605).

The data requiring part 132 sets a larger range than the required range, as a new display range, and makes a data range updating demand to the data range updater 114 (S606). The data range updater 114 causes the received range to be reflected to the display range data 142 (S607).

The data requiring part 132 delivers a key, which is received from the client data acquiring part 113, and a new data range to the client communication controller 121 (S608), and makes a data acquiring demand (S609). The client communication controller 121 delivers the received unacquired key to the client data transmitter/receiver 122, and makes a data transmitting demand to the server (S610). Immediately after the client communication controller 121 makes the data transmitting demand, the client communication controller 121 transmit data to the server in the order of the new data range followed by the unacquired key (S611).

The server data transmitter/receiver 222 receives the data requiring demand, new data range and unacquired key which are transmitted from the client (S612), and delivers them to the server communication controller 221. The server communication controller 221 temporarily stops the acquisition and transmission of the updated data (S613). The server communication controller 221 gives the received unacquired key to the server data acquiring part 213, and makes a data acquiring demand (S614).

The server data acquiring part 213 acquires data having the received key (S615), and returns it to the server communication controller 221. The server communication controller 221 delivers data having the returned unacquired key to the server data transmitter/receiver 222 to transmit data to the client (S616).

When data transmission finishes, the server communication controller 221 delivers the new data range, which has been acquired with the unacquired key, to the management data updater 215 to update the client management data 242 (S617).

The client data transmitter/receiver 122 receives data transmitted from the server (S618), and delivers it to the client communication controller 121. The client communication controller 121 delivers the received data to the client data storing part 112 to update the general data 141 (S619). After data is stored, the client communication controller 121 delivers the received data to the data requiring part 132, and the data requiring part 132 delivers the received data to the data display 131 (S620).

The server communication controller 221 restarts the acquisition and transmission of updated data which have been temporarily stopped (S621). The server communication controller 221 acquires a new data range from the management data acquiring part 216, and reads the update history while data is transmitted from the server (S622). Then, the server communication controller 221 delivers keys corresponding to the update history, and the acquired data range to the server data acquiring part 213, to deliver the acquired data to the server data transmitter/receiver 222 to transmit updated data (S623).

The client data transmitter/receiver 122 received the transmitted updated data, and delivers the received data to the client communication controller 121 (S624). The client communication controller 121 delivers the received data to the client data updater 111 to update the general data 141 (S625).

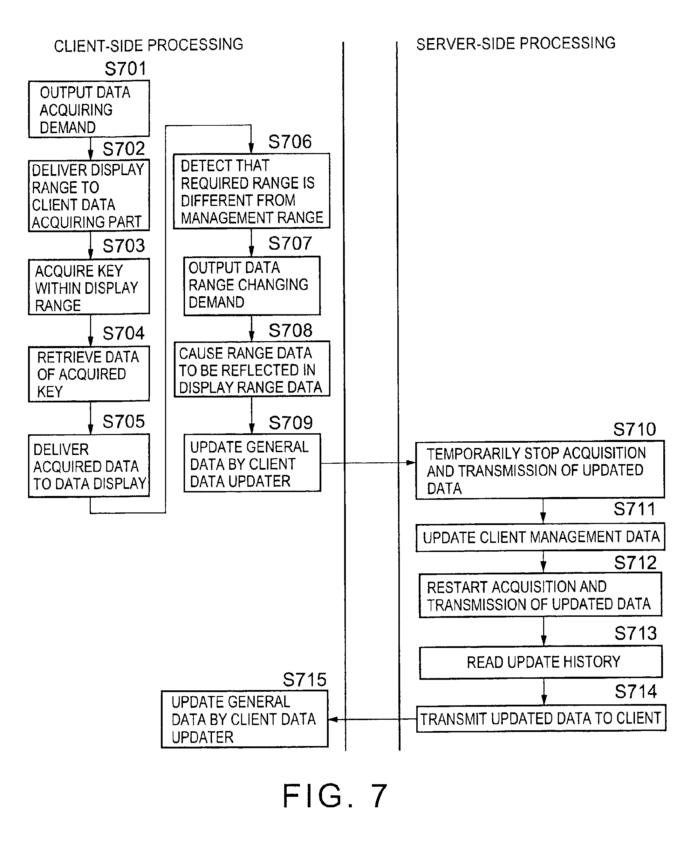

### [2-3-5-2. In a case where All Data within Required Range has been stored in General Data (FIG. 7)]

The data display 131 intends to display data, which has not been displayed, on the screen. Then, the data display 131 makes a data acquiring demand to the data requiring part 132 (S701). The data requiring part 132 delivers the display range, which is given from the data display 131, to the client data acquiring part 113 (S702).

The client data acquiring part 113 acquires a key within the display range from the entire range data 143, with respect to the display range given from the data requiring part 132 (S703). Then, for each acquired key, data having the key is retrieved from the general data 141 (S704). Since data could be acquired with respect to all of keys, the acquired data is delivered to the data display 131 (S705).

The data requiring part 132 detects that the required range is different from the range managed in the display range data 142 (S706). The data requiring part 132 sets a larger range than the required range, as a new display range, and makes a data range changing demand to the data range updater 114 (S707). The data range updater 114 causes the received range to be reflected in the display range data 142 (S708).

The data requiring part 132 delivers the new data range to the client communication controller 121, and makes a data range changing demand. The client communication controller 121 delivers the received data range to the client data transmitter/receiver 122, and makes a data range changing demand to the server (S709).

The server data transmitter/receiver 222 receives the new data range transmitted from the client, and delivers it to the server communication controller 221. The server communication controller 221 temporarily stops the acquisition and transmission of updated data (S710). The server communication controller 221 delivers the received new data range to the management data updater 215 to update the client management data 242 (S711).

The server communication controller 221 restarts the acquisition and transmission of updated data which have been temporarily stopped (S712). The server communication controller 221 acquires the new data range from the management data acquiring part 216, and reads the update history while the server has updated the data range (S713). The server communication controller 221 delivers a key corresponding to the update history, and the acquired data range to the server data acquiring part 213, and delivers the acquired data to the server data transmitter/receiver 222 to transmit updated data (S714).

The client data transmitter/receiver 122 receives the transmitted updated data, and delivers the received data to the client communication controller 121. The client communication controller 121 delivers the received data to the client data updater 111 to update the general data 141 (S715).

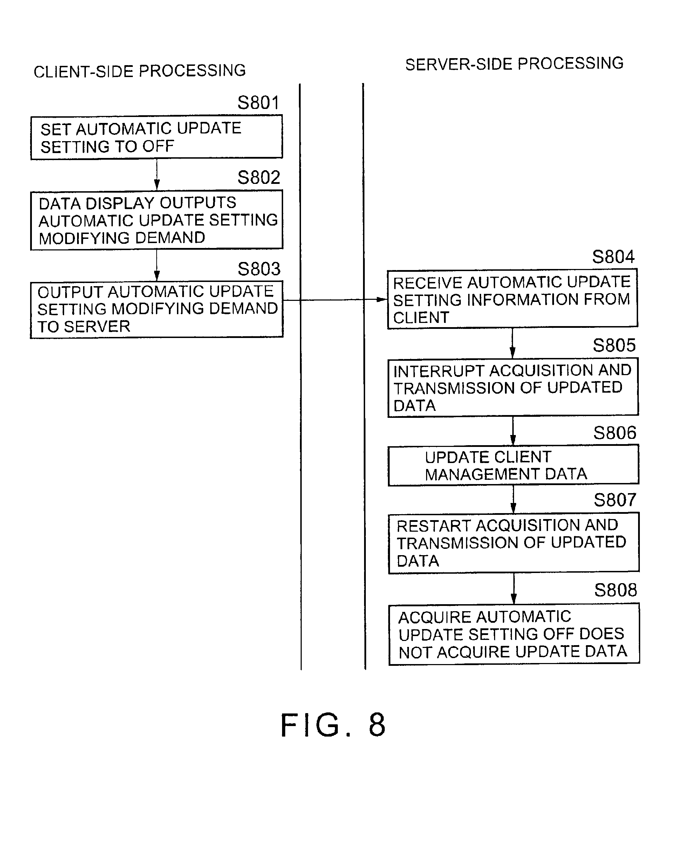

### [2-3-6. In a case where Automatic Update Setting of Client is changed from On to Off (FIG. 8)]

When the automatic update setting of the client is On, the automatic update setting is set to be Off by the data display 131 (S801). The data display 131 delivers automatic update setting information to the data requiring part 132, and makes an automatic update setting modifying demand (S802).

The data requiring part 132 delivers the received automatic update setting information to the client communication controller 121, and makes an automatic update setting modifying demand. The client communication controller 121 delivers the received automatic update setting information to the client data transmitter/receiver 122, and makes an automatic update setting modifying demand to the server (S803).

The server data transmitter/receiver 222 receives the automatic update setting information transmitted from the client (S804), and delivers the received information to the server communication controller 221. The server communication controller 221 temporarily stops the acquisition and transmission of updated data (S805). The server communication controller 221 delivers the received automatic update setting information to the management data updater 215 to update the client management data 242 (S806).

The server communication controller 221 restarts the acquisition and transmission of updated data which have been temporarily stopped (S807). However, since the automatic update setting has been Off, the acquisition of updated data is no longer carried out.

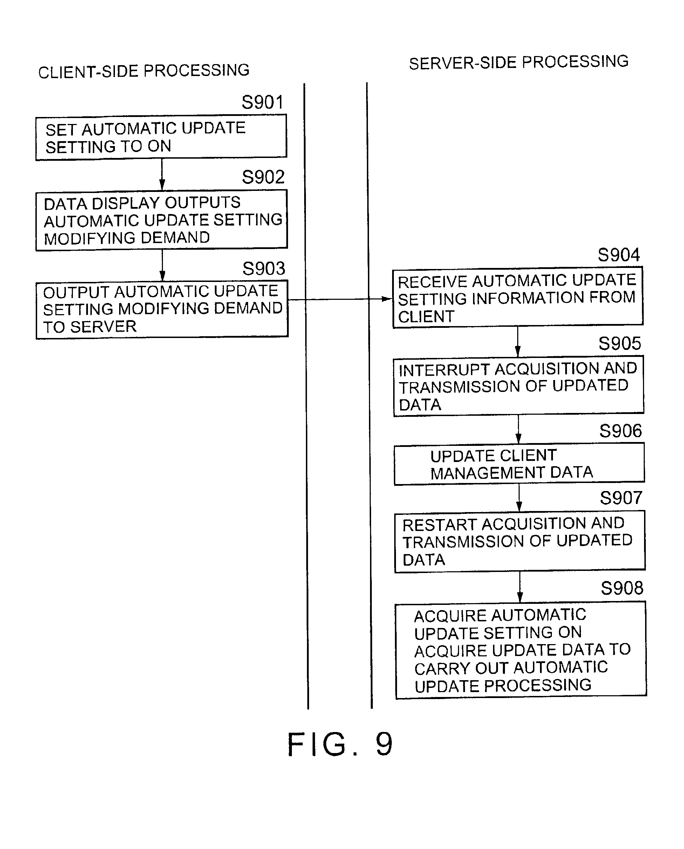

### [2-3-7. In a case where Automatic Update Setting of Client is changed from Off to On (FIG. 9)]

When the automatic update setting of the client is Off the automatic update setting is set to be On by the data display 131 (S901). The data display 131 delivers automatic update setting information to the data requiring part 132, and makes an automatic update setting modifying demand (S902).

The data requiring part 132 delivers the received automatic update setting information to the client communication controller 121, and makes an automatic update setting modifying demand. The client communication controller 121 delivers the received automatic update setting information to the client data transmitter/receiver 122, and makes an automatic update setting modifying demand to the server (S903).

The server data transmitter/receiver 222 receives the automatic update setting information transmitted from the client, and delivers the received information to the server communication controller 221 (S904). The server communication controller 221 temporarily stops the acquisition and transmission of updated data (S905). However, the current setting is Off, the acquisition of updated data has not been actually carried out. The server communication controller 221 delivers the received automatic update setting information to the management data updater 215 to update the client management data 242 (S906).

The server communication controller 221 restarts the acquisition and transmission of updated data which have been temporarily stopped (S907). Since the automatic update setting has been changed to On as described in the last paragraph, a usual automatic update processing is carried out when data is updated after restarting (S908).

### [2-3-8. Effects of Embodiment]

In this embodiment with the above described construction, only required data out of data stored in the server can be possessed by the client, so that it is easy to carry out a resource management on the side of the client. If data is updated on the side of the server, even if no inquiry is made, updated data can be transmitted to the client, and the time required to update data on both sides of the server and the client can be reduced by the inquiry of the client.

When data is distributed to the client, only differential data which has been updated on the side of the server and which is included in the display range of the client is transmitted, so that it is possible to transmit only the minimum data. The fact that the number of communication operations and that the amount of transmission data are small means that one update of data is rapidly carried out. Therefore, it is possible to real-time update data on a wide-area network, such as Internet.

As described above, according to the present invention, it is possible to provide a data sharing/distributing method capable of real-time updating data between a plurality of computers and capable of reducing load on the network.

## Claims

1. A data distributing method for distributing updated data to a client by a push type distribution after data of a data base of a server is updated, to share data between the server and the client, the method comprising:
causing the server to store a client management information including a data range, which the client is using, in the data base of the server, and
causing the server to identify data, which is to be transmitted to the client, by referring to the client management information before transmitting data.

2. The data distributing method as set forth in claim 1, wherein data transmitted to the client is a differential data before and after update of data updated on the server.

3. The data distributing method as set forth in either of claims 1 or 2, wherein the client management information includes information about the necessity of transmission of data from the server to the client, and sets so as not to transmit data to the client, which carries out a push type distribution, by referring to the client management information before transmission.

4. The data distributing method as set forth in any preceding claim, wherein, the server starts, prepares for acceptance of a data transmitting demand from the client, and starts monitoring of update of data on the server in order to distribute updated data to the client when update of data is carried out on the server.

5. The data distributing method as set forth in any preceding claim, wherein, when the client starts, the server receives a data transmitting demand for specifying data which is acquired by the client, and fetches data, which suit the data transmitting demand, from the data base of the server, the server transmitting the fetched data to the client as its initial data.

6. The data distributing method as set forth in any preceding claim, wherein, while the client is operating, the server receives a data transmitting demand for specifying data which is not stored in the client, from the client, and acquires the data from the data base, and transmits the data to the client.

7. The data distributing method as set forth in any preceding claim, wherein, when the server receives a notice of change of data range in use from the client, the server registers the changed data range in use in the client management information in the data base of the server, and when data on the server is updated after that, the server transmits an updated data corresponding to the changed data range in use to the client.

8. The data distributing method as set forth in any preceding claim, wherein, the server receives a data distribution rejecting demand from the client, and sets a data distribution setting in the client management information to be "non-distribution", so that data is not transmitted to the client even if data is updated by the server after setting is changed.

9. The data distributing method as set forth in any preceding claim, wherein, the server receives a distributing demand from the client, and sets a data distributing setting in the client management information to be "distribution", so that updated data is transmitted to the client if data is updated by the server after setting is changed.

10. The data distributing method as set forth in claim 8, wherein, when data currently used by the client is updated in the server, the server fetches an update setting of the client from the client management information, and if the distribution setting is set, the server fetches an updated data corresponding to data in use by the client in order to cause the change on the server to be reflected in the client, and transmits the fetched updated data to the client,
when the non-distribution setting is set, the server ends the notice processing, and continues monitoring with respect to update of data on the server.

11. A computer readable medium containing a data distributing program for distributing updated data to a client by a push type distribution after data of a data base of a server is updated, to share data between the server and the client, the program comprising instructions for:
causing the server to store a client management information including the data range, which the client is using, in the data base of the server; and
causing the server to identify data, which is to be transmitted to the client, by referring to the client management information before transmitting data.

12. The computer readable medium as set forth in claim 11, wherein data transmitted to the client is a differential data before and after update of data updated on the server.

13. The computer readable medium as set forth in either of claims 11 or 12, wherein the client management information includes information about the necessity of transmission of data from the server to the client, and sets so as not to transmit data to the client, which carries out a push type distribution, by referring to the client management information before transmission.

14. The computer readable medium as set forth in any of claims 11 to 13, wherein, when the server starts, prepares for acceptance of a data transmitting demand from the client, and starts monitoring of update of data on the server in order to distribute updated data to the client when update of data is carried out on the server.

15. The computer readable medium as set forth in any of claims 11 to 14, wherein, when the client starts, the server receives a data transmitting demand for specifying data which is acquired by the client, and fetches data, which suit the data transmitting demand, from the data base of the server, the server transmitting the fetched data to the client as its initial data.

16. The computer readable medium as set forth in any of claims 11 to 15, wherein, while the client is operating, the server receives a data transmitting demand for specifying data which is not stored in the client, from the client, and acquires the data from the data base, and transmits the data to the client.

17. The computer readable medium as set forth in any of claims 11 to 16, wherein, when the server receives a notice of change of data range in use from the client, the server registers the changed data range in use in the client management information in the data base of the server, and when data on the server is updated after that, the server transmits an updated data corresponding to the changed data range in use to the client.

18. The computer readable medium as set forth in any of claims 11 to 17, wherein, the server receives a data distribution rejecting demand from the client, and sets a distribution setting to the client management information to be "non-distribution", so that data is not transmitted to the client even if data is updated by the server after setting is changed.

19. The computer readable medium as set forth in any of claims 11 to 18, wherein, the server receives a distributing demand from the client, and sets a data distributing setting in the client management information to be "distribution", so that updated data is transmitted to the client if data is updated by the server after setting is changed.

20. The computer readable medium as set forth in claim 18, wherein, when data currently used by the client is updated in the server, the server fetches an update setting of the client from the client management information, and if the distribution setting is set, the server fetches an updated data corresponding to data in used by the client in order to cause the change on the server to be reflected in the client, and transmits the fetched updated data to the client,
when the non-distribution setting is set, the server ends the notice processing, and continues monitoring with respect to update of data on the server.

21. A carrier medium carrying computer readable instructions for controlling a computer to perform the method of any of claims 1 to 10.
